# NEW EUROPEAN PATENT SPECIFICATION

(11) **EP 0 407 003 B2**
(45) Date of publication and mention of the opposition decision: **23.06.2004**
(45) Mention of the grant of the patent: 01.12.1993
(21) Application number: 90304175.4
(22) Date of filing: 19.04.1990
(51) Int. Cl.: B01J 19/06, C01F 7/74, C01B 17/69

(54) **Gelling composition**
Gelbildende Zusammenstellung
Composition gélifiante

(30) Priority: 19.04.1989 AU 375689
(43) Date of publication of application: 09.01.1991
(73) Proprietor: H.A. MILTON HOLDINGS PTY. LTD., Adelaide, South Australia (AU)
(72) Inventor: Blake, Richard Scott, Bellevue Heights, South Australia (AU); Aldous, Graham Leslie, Summertown, South Australia (AU)
(74) Representative: Quest, Barry

(56) References cited:
- EP-A- 0 011 984
- EP-A- 0 362 981
- DE-A- 2 524 309
- DE-B- 1 103 313
- GB-A- 1 572 032
- JP-A- 59 008 711
- US-A- 3 553 016
- US-A- 4 614 607
- CHEMICAL ABSTRACTS, vol. 98, no. 18, 2 May 1983 Columbus, Ohio, USA C. Taguchi: "Pickling agents." page 263; ref. no. 147727 Z
- Technical Bulletin Pigments; Aerosil-Properties relating to use in Cosmetics (Degussa), 2nd ed. (1978)
- American Perfumer and Cosmetics, vol. 81, Oct. 1966, pp 51-52, "Functions of fumed silica in cosmetic drug products"
- Technical Bulletin Pigments; Basic Characteristics and Applications of Aerosil (Degussa), Reprint from Kautschuk and Gummi, Kunststoffe, vol. 20, 10, p. 578-586 (1967)

## Description

This invention relates to a novel gelling system, and more particularly to a method of gelling aqueous solutions of polyvalent metallo-cations, and also to novel gelling compositions.

The formation of gels and viscous emulsions with thickening agents has traditionally been used as a means of providing ease in packaging, dispensing and for the application of liquids and solutions. One traditional method used is the formation of an emulsion system using a mixture of mutually insoluble phases, for example water and oil, to form a liquid in liquid dispersion. The dispersion is usually stabilised and may be thickened with suitable surfactants and waxes. Alternatively, a gel is made by the addition of a gelling agent to thicken the liquid. Traditional gelling agents for thickening aqueous systems include cellulose derivatives such as carboxymethylcellulose or hydroxypropylcellulose, natural gums such as gum tragacanth, acacia or gelatine, or synthetic polymers such as the carbopols (Trade Mark of B.F. Goodrich). These gelling agents are commonly used to produce preparations for use as pharmaceuticals, cosmetics, and household or personal care products.

It is also known to use fumed silica to gel acid solutions. For example, British patent specification No GB-A-1572032 discloses compositions comprising fumed silica and an aqueous acid. These compositions are thixotropic gels, or are capable of becoming thixotropic gels on standing.

Furthermore, it is known to add surfactants to polar solvents comprising silica. For example, American Perfumer & Cosmetics, Vol. 81 (1966), pages 51-52 discloses the use of surfactants to thicken polar solvents comprising silica as the presence of the surfactants reduces the amount of silica required to achieve a thickened medium.

EP 0011984 discloses thixotropic abrasive liquid scouring compositions comprising insoluble abrasive particles, water, a surfactant, a bleaching agent, an electrolyte, a light density filler and a water-insoluble multivalent metal stearate soap as gelling agent.

Highly concentrated aqueous solutions of aluminium salts are used for a variety of purposes in pharmaceutical and cosmetic products. The high ionic strength of the aluminium ion (A1³⁺) acts as a powerful protein denaturant and similarly distorts the stereochemistry of long chain polysaccharide molecules and other polymers. The A1³⁺ ion, and other highly disassociated ionic compounds which form solutions of high ionic strength, have a very destructive effect on the gelling abilities of all protein, polysaccharide and polymer-type gums that can be used as gelling agents. This includes all traditional gelling agents used for aqueous solution systems. Furthermore, it also has a destructive effect on the ability of many commonly used surfactants to stabilise and thicken emulsion systems. Thus, the production of stable gels from aqueous solutions containing polyvalent inorganic ions has heretofore been difficult to achieve.

It is an object of the present invention to provide a novel gelling system which will produce stable gels of controllable viscosity with aqueous solutions comprising polyvalent aluminium cations - where the traditional protein, polysaccharide or other long chain molecule gelling agents have proved ineffective.

In its broadest form, the present invention is directed to a novel thickening or gelling system for aqueous solutions of polyvalent aluminium cations, comprising a finely divided or fumed silica in combination with a surfactant.

According to one aspect of the invention, there is provided a novel thickening or gelling composition for an aqueous solution containing polyvalent cations comprising a finely divided or fumed silica in combination with a surfactant, wherein the polyvalent cations are aluminium ions.

As referred to throughout the specification and claims, "polyvalent" means having a valency of two or more.

In a preferred embodiment of this invention, the fumed silica ranges in concentration from 3% to 10% by weight and the surfactant is present in the range of from 2.0% to 10% by weight (depending on its chemical structure).

In another preferred embodiment, the gelling composition further comprises a silica derivative such as finely divided magnesium aluminium silicate (marketed under the proprietary name of VEEGUM by R.T. Vanderbilt Company), preferably in the range of 1% to 10% concentration by weight, this being an additive to improve gel texture.

In another aspect of this invention, there is provided a method of gelling aqueous solutions containing polyvalent cations, e.g. A1³⁺ ions, with a gelling composition comprising a fumed silica and a suitable surfactant.

The gelling composition of this invention may, for example comprise fumed silica sold under the proprietary name "AEROSIL 200" manufactured by Degussa.

In a preferred embodiment of the present invention, the gelling composition is used as a gelling agent for an aluminium sulphate solution of 20% w/v, the concentration of which may widely vary as the gelling system appears to be largely unaffected by the concentration of the solute.

Whilst fumed silica is known to act as a gelling agent in its own right, it is, however, well documented that its gelling action is ineffective in aqueous solutions of polyvalent cations - except at very high concentrations requiring in excess of 10% (by weight). The thickening action of fumed silica is claimed to be due to hydrogen bonding between the silanol groups (the silica particles containing silanol groups on the surface). It is believed that where the solute is itself capable of hydrogen bonding, the silanol-silanol bonding is inhibited by competition. It is thus well known that aqueous solutions gel poorly, or not at all, with fumed silica alone and that aqueous solutions containing high ionic concentrations of, for example A1³⁺ ions, or other inorganic ions such as magnesium and calcium, gel poorly, or are very unstable.

Rather unexpectedly however, the applicant has found that by combining fumed silica with one or more suitable surfactants, the cross molecular hydrogen bonding appears to be enhanced and results in controllable and stable gels with very much lower concentrations of fumed silica.

Suitable surfactants may be selected from each of the four main classes, i.e. (a) nonionic surfactants such as the ethoxylated nonyl phenol products marketed under the proprietary name "TERIC" by ICI;
(b) anionic surfactants such as sodium lauryl diethoxysulphate marketed under the proprietary name "EMPICOL ESB" by Albright & Wilson or fatty alcohol sulphate compounds marketed under the proprietary name of "TEXAPON" by Henkel; (c) amphoteric surfactants; and (d) cationic surfactants such as "CETRIMIDE BP".

Each of these classes may be further divided into sub-classes reflecting the different functional groups within the chemical structure. (See Tables 1 and 2 below for further examples of suitable surfactants.)

**TABLE 1**

| ANIONIC SURFACTANTS AMPHOTERIC SURFACTANTS | NONIONIC SURFACTANTS | CATIONIC SURFACTANTS |
|---|---|---|
| Alkyl sulphates | Glycerol esters | Cetrimide |
| Imidazoline derivatives | Sorbitan esters | |
| Sodium alkyl ether sulphates | Macrogol ethers | |
| Alkyl phosphates | | |
| Amine salts | | |

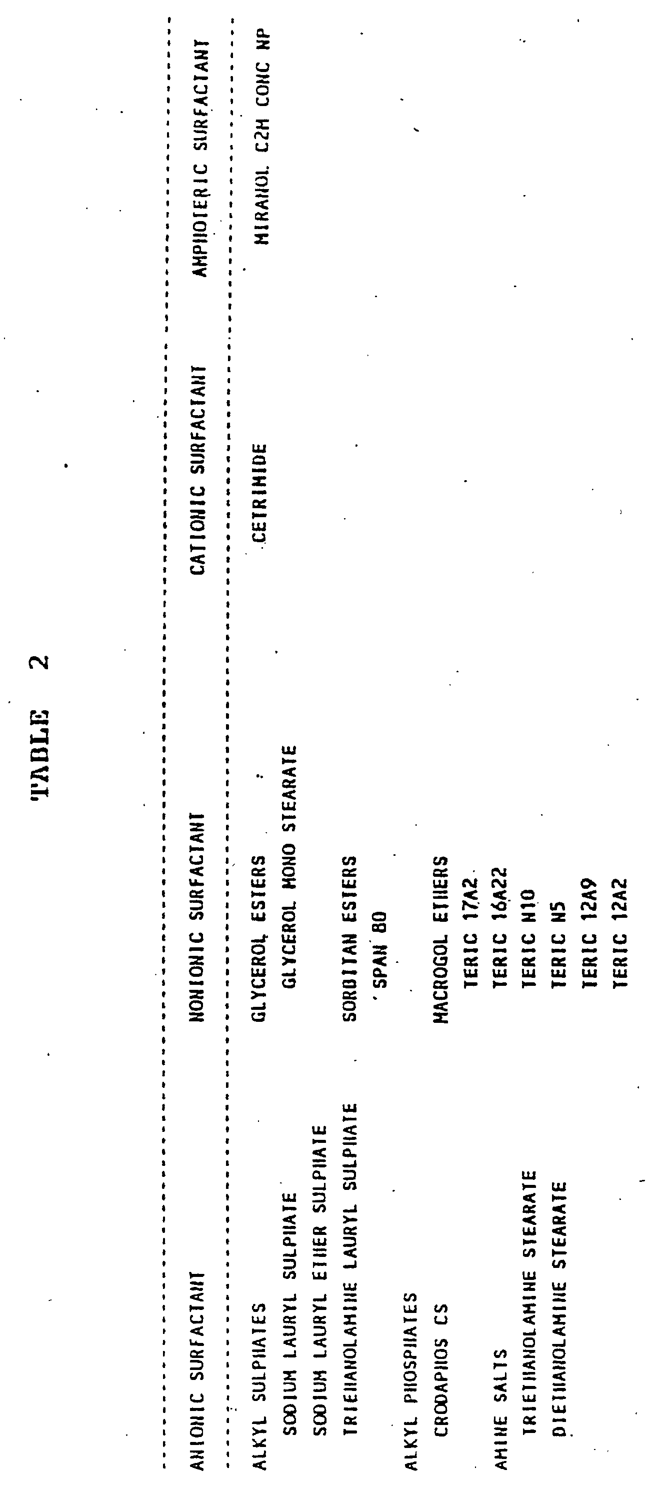

These are given as examples only and are not intended to limit the invention, which may of course use any other suitable surfactant.

In general, the addition of up to 10% w/v of the surfactants listed in Table 2 to a 20% solution of aluminium sulphate, resulted in either the separation from solution of the surfactant, or the formation of a uniform dispersion, or solution, with no observable change to the viscosity of the solution. An exception to this was the formation of a thickened solution or gel when sodium lauryl diethoxy sulphate or triethanolamine lauryl sulphate was added to a 20% solution of aluminium sulphate.

The addition of up to 6% w/v of fumed silica (AEROSIL 200) to a 20% solution of aluminium sulphate produced little change to the viscosity of the solution.

However, it was discovered that the combination of some of the surfactants listed in Table 2 and fumed silica, when added to solutions of the ions listed above, resulted in thickened solutions or gels. Further, the gels resulting when sodium lauryl diethoxy sulphate or triethanolamine lauryl sulphate were added to a 20% solution of aluminium sulphate were improved by the addition of fumed silica.

Further, thickening and gelling of concentrated solutions of phosphoric, sulphuric and hydrochloric acids has been achieved using the same techniques. It is of interest to note that in this instance the addition of sodium lauryl diethoxy sulphate to a 20% solution of either of the above acids did not thicken or gel the solutions. The combination of surfactant and fumed silica however, when added to concentrated solutions of these acids, did lead to the formation of gels.

The data set out in Table 3 illustrates the thickening and gelling ability of a variety of surfactants in combination with fumed silica, when added to solutions of highly ionic or acidic nature. All solutions contained 20% of the desired salt or acid and 6% of fumed silica (AEROSIL 200). A viscosity of greater than 4000 CPS was considered a gel, a viscosity of 1000 to 4000 CPS was considered thickened, and a viscosity of less than 1000 CPS was considered to have no effect.

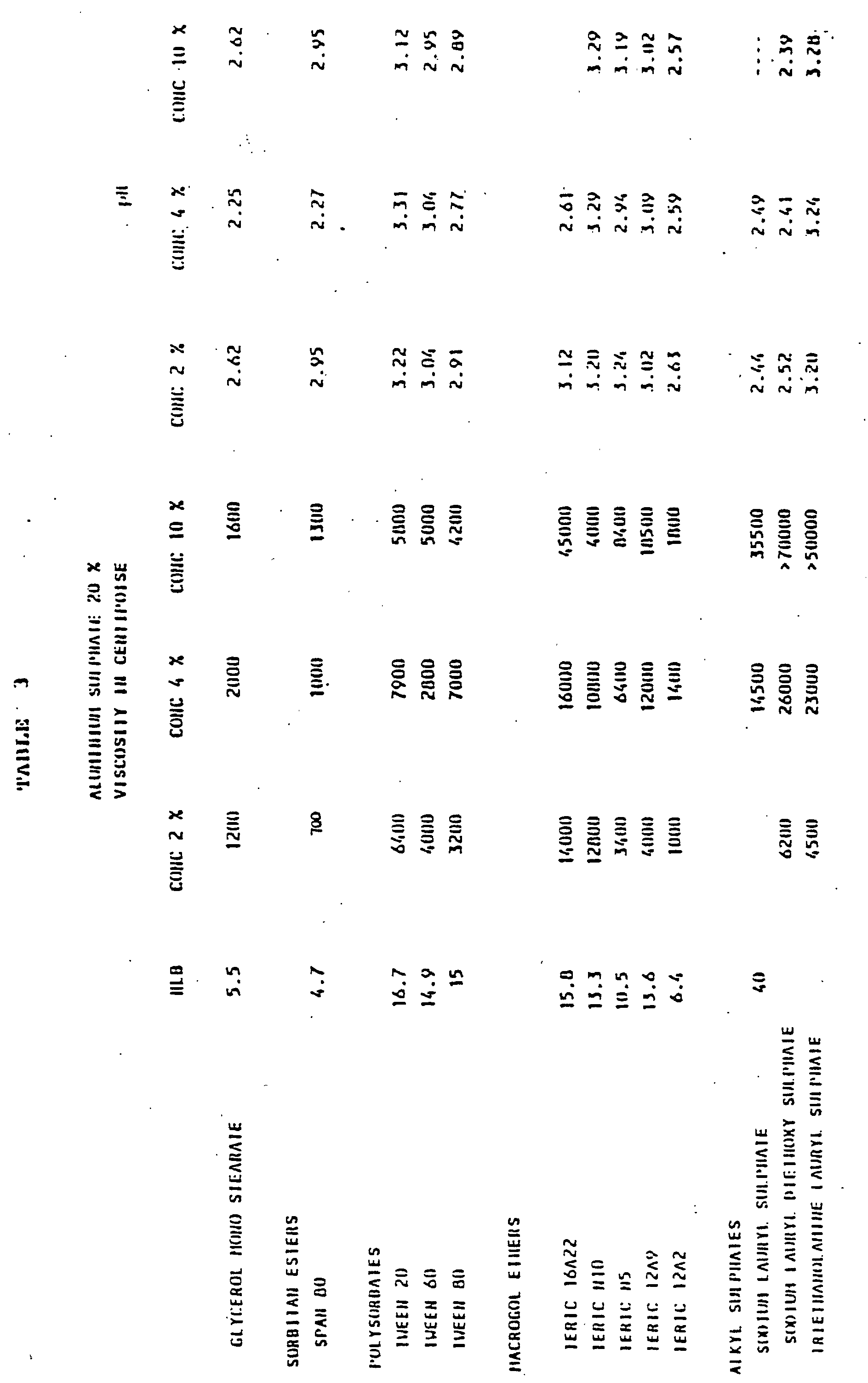

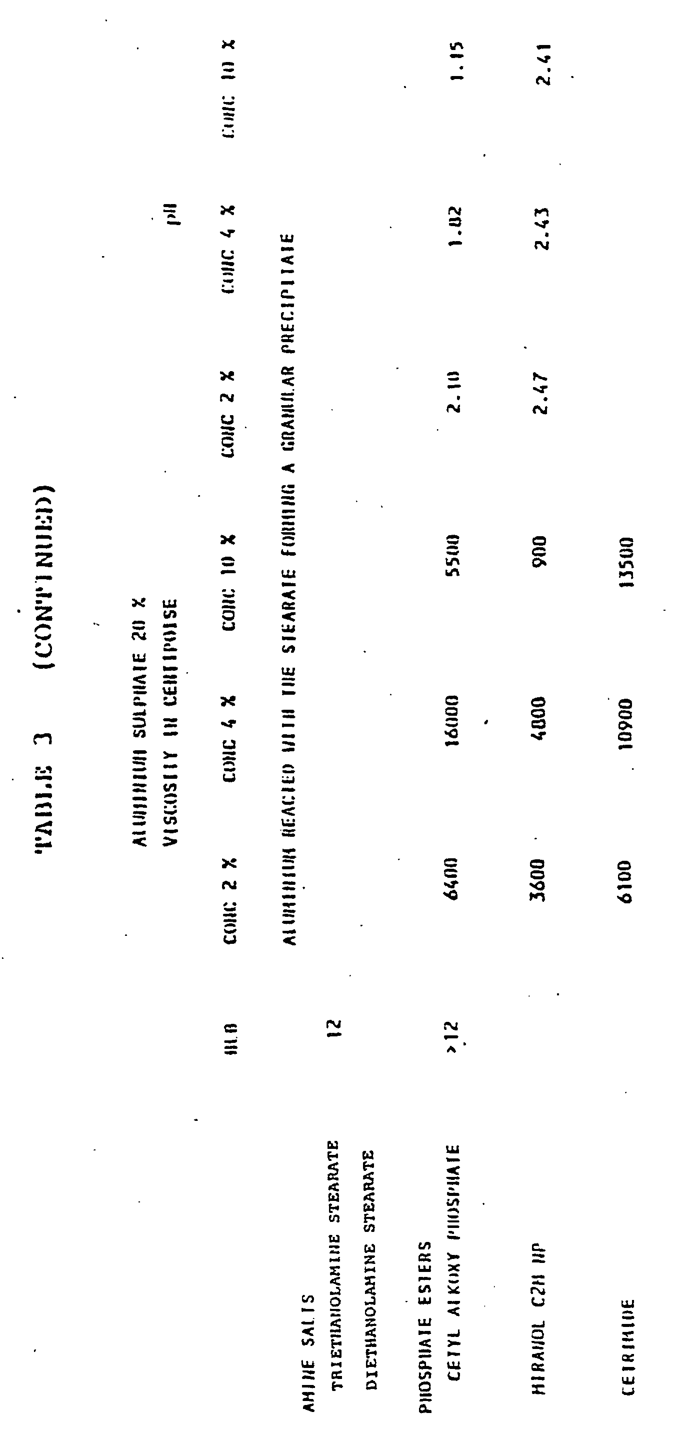

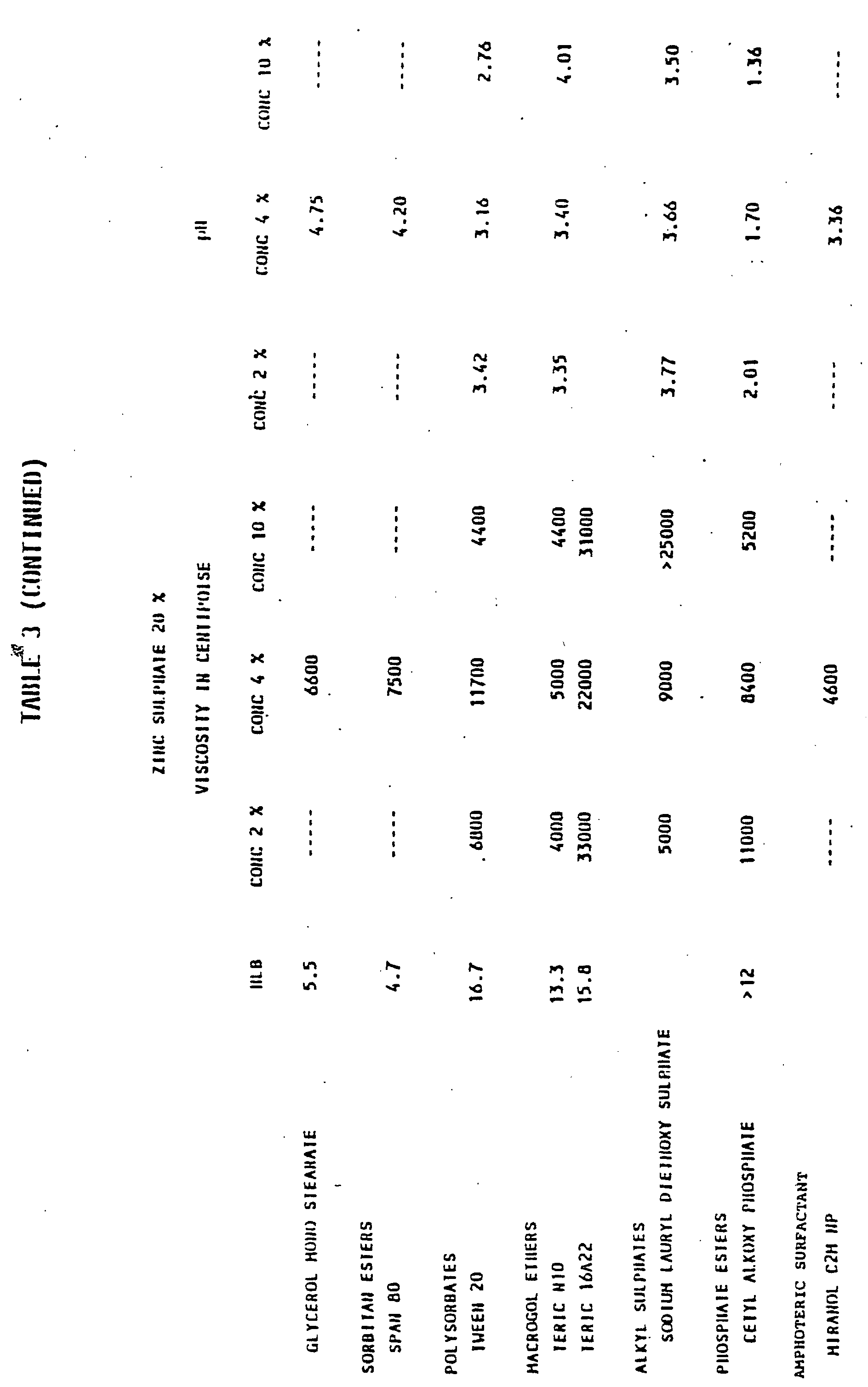

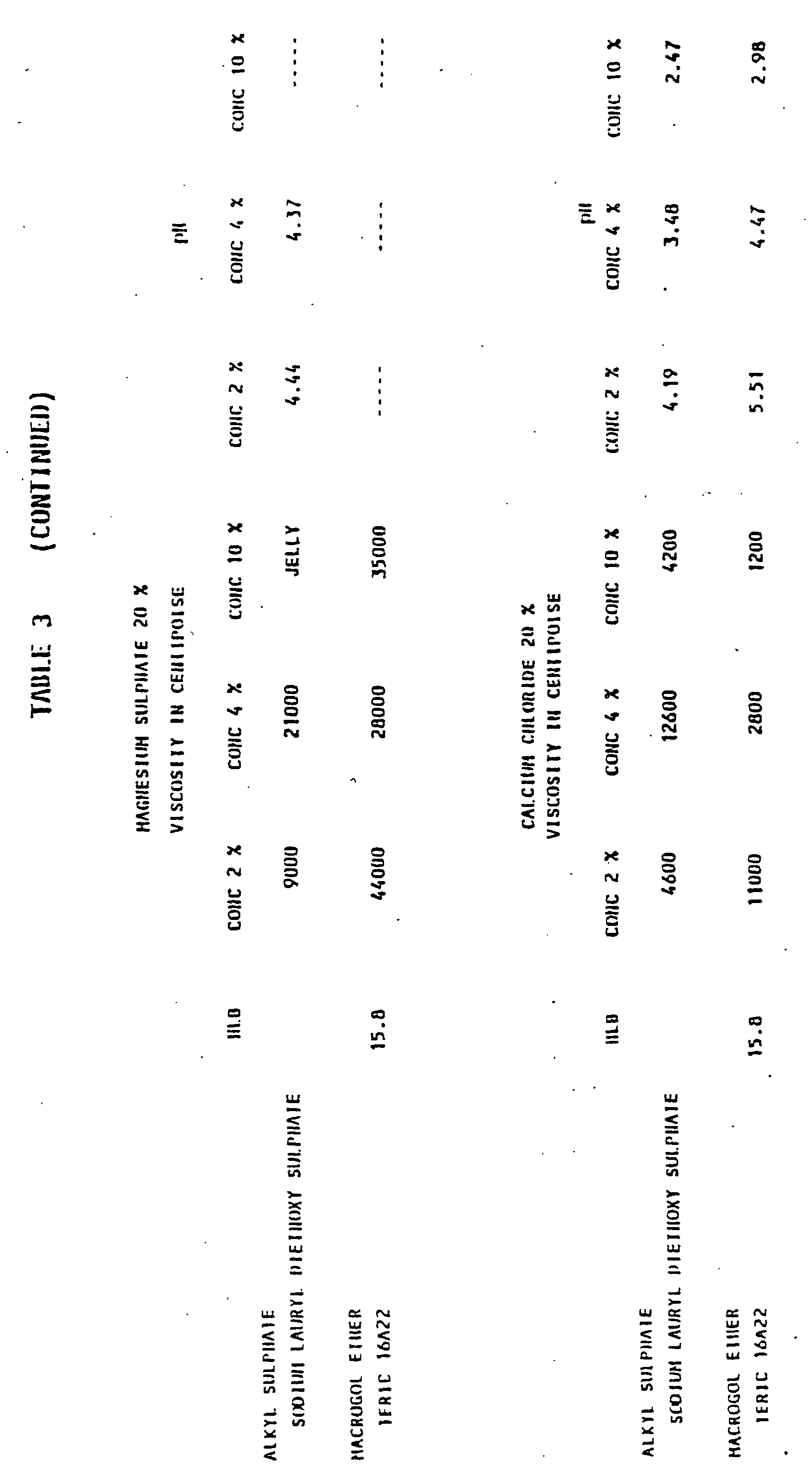

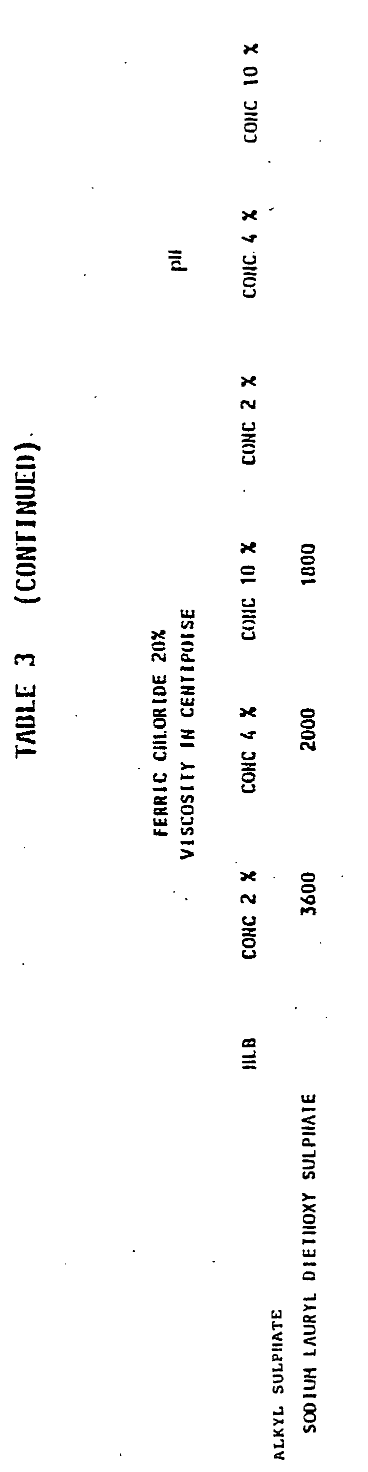

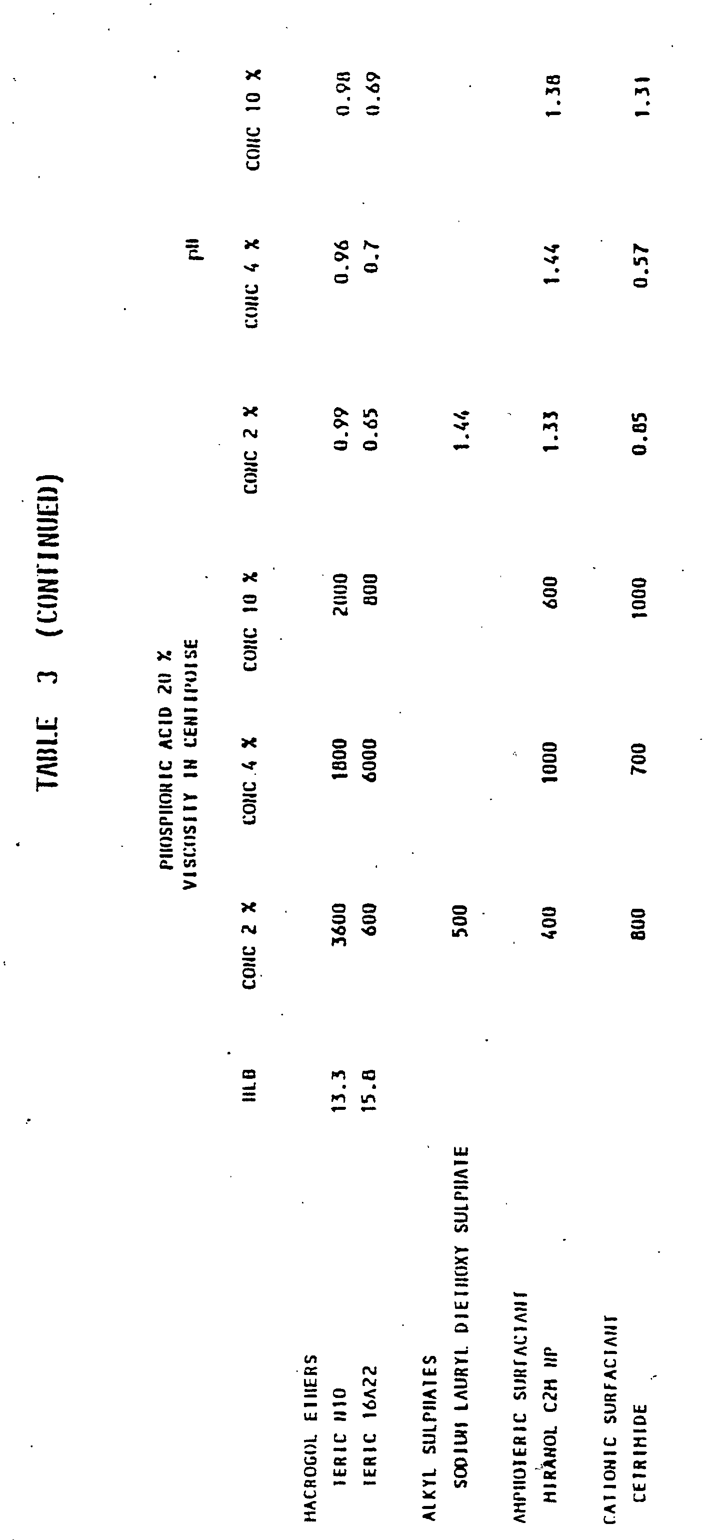

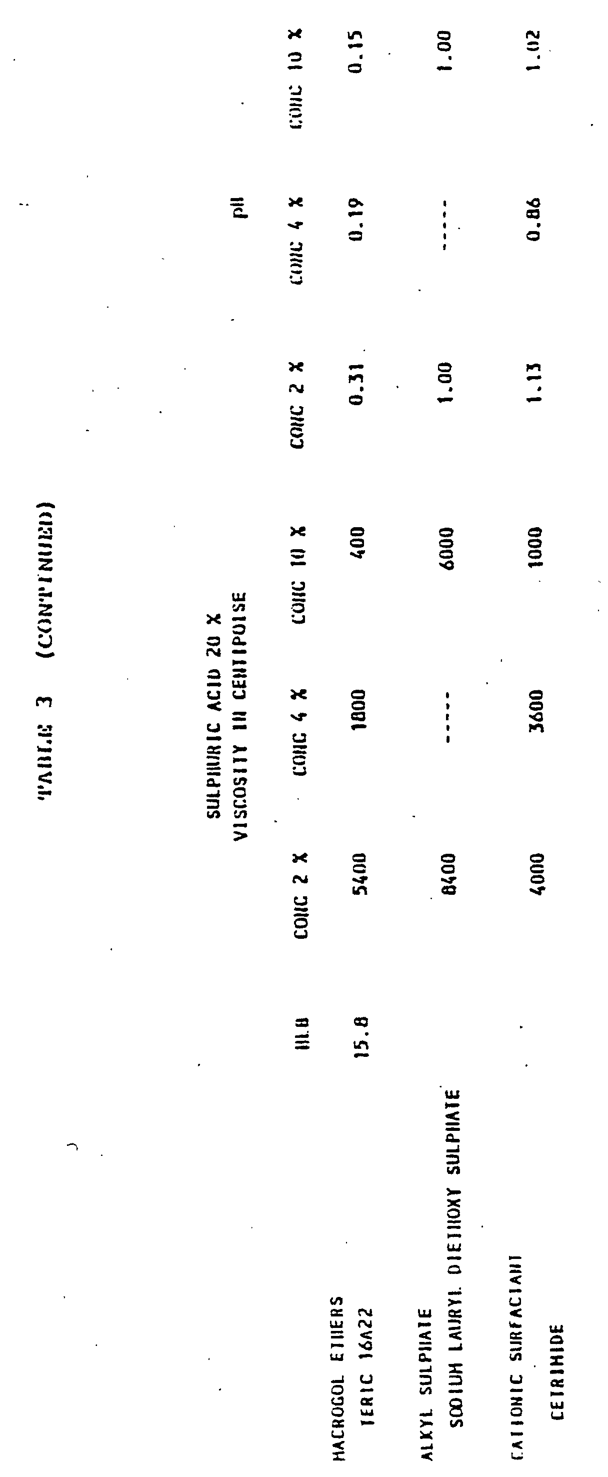

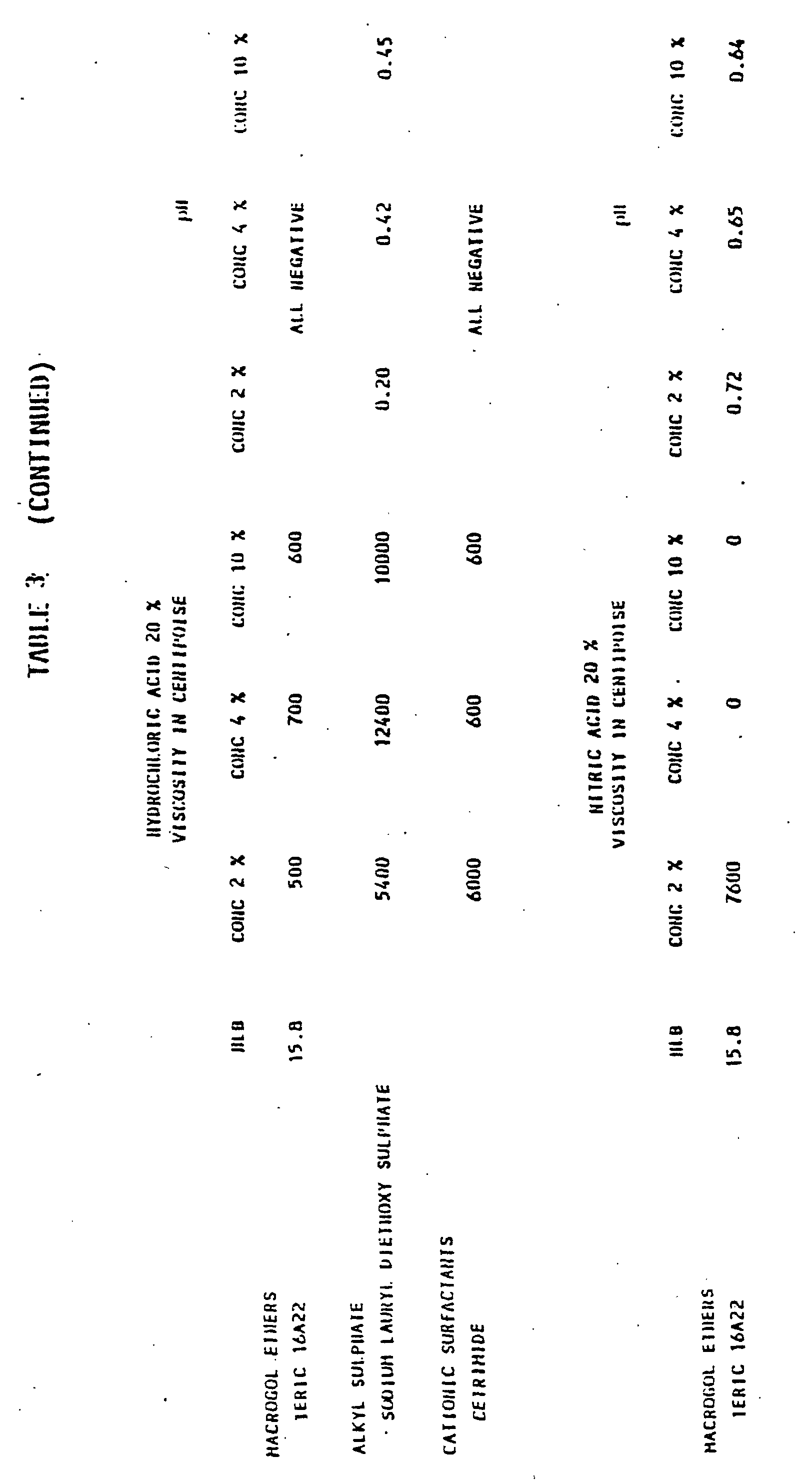

Several conclusions can be drawn from Table 3.
(1) Surfactants from all four major classes may exhibit gelling or thickening properties when added with fumed silica to highly acidic solutions or solutions of polyvalent ions.
(2) The presence of ethylene oxide condensates within the chemical structure of cationic, amphoteric and anionic surfactants is not necessary for the surfactant to exhibit gelling or thickening properties when added with fumed silica to highly ionic or acid solutions. However, nonionic surfactants with a high number of ethylene oxide condensates form gels or thickened solutions more readily than those with a low number of ethylene oxide condensates. For example, sodium lauryl sulphate, an anionic surfactant containing no ethylene oxide condensates, or sodium lauryl diethyoxy sulphate, also anionic but containing two ethylene oxide condensates, readily gel a 20% solution of aluminium sulphate in the presence of fumed silica. However, teric 17A2, a nonionic surfactant with two ethylene oxide condensates, failed to thicken or gel a 20% solution of aluminium sulphate, whereas teric 16A22, also a nonionic surfactant but containing twenty-two ethylene oxide condensates, readily gelled at 20% aluminium sulphate solution in the presence of fumed silica.
(3) Surfactants with a H.L.B. value greater than 10 formed gels or thickened solutions more readily than those with a H.L.B. less than 10.
(4) The salts tested were polyvalent metallic cations representing a broad cross section of the periodic table, illustrating the broad application of the new gelling system.
(5) The relationship between concentration of surfactant used and viscosity of a test solution containing a constant amount of fumed silica was not always linear. That is, increasing the concentration of surfactant did not always increase the viscosity.

The following further examples are given for the purpose of illustrating the invention, but of course it should be appreciated that such examples are not in any way intended to limit the invention.

Gels were prepared as described below. All viscometry measurements were performed on a Brookfield Viscometer, at 25 Centigrade using a spindle T-F (96) and speed of 50 RPM. pH measurements were made using an Orion model 720 meter with a combination pH electrode (Ross model 8102).

### EXAMPLE 1

Aluminium sulphate BP (74.56g, equivalent to 40g of aluminium sulphate) was added to warm water (approximately 150ml, 70° Centigrade) and stirred till dissolved. To the resulting solution was added a surfactant (2% w/v, 4% w/v or 10% w/v), which was then stirred to disperse the surfactant throughout the mixture. AEROSIL 200 (12g) was then slowly added with continual stirring to the above mixture. The volume of the resulting gel was adjusted to 200ml with water, the gel was then cooled to 25° Centigrade and the pH and viscosity measured.

In the following Examples 2 to 4, the gels are prepared by dissolving the surfactant in the solution of the ionic compound to be gelled (with the use of heat if necessary), blending the fumed silica into the ionic compound/surfactant mixture to form the gel, and, if required, passing the gel through a high shear or ultrasonic homogeniser to ensure uniform dispersion.

All of the percentages expressed in the following Examples 2 to 4 are based on weight.

### EXAMPLE 2

This illustrates the use of combined surfactants.
Aluminium sulphate 20%
Teric N10 1%
Empicol ESB 4%
Aerosil 200 6 %
Water to 100%

### EXAMPLE 3

Aluminium sulphate 20%
Aerosil 200 6%
Cetrimide 0.5%
Water to 100%

### EXAMPLE 4

Aluminium sulphate 20%
Aerosil 200 6%
Veegum 2%
Cetrimide 0.5%
Water to 100%

The present invention is thus directed to a novel gelling system involving the use of a finely divided or fumed silica in combination with a suitable surfactant for use with aqueous solutions of polyvalent aluminium cations, where the traditional protein, polysaccharide or other long chain molecule gelling agents have proven ineffective.

## Claims

1. A composition comprising an aqueous solution of polyvalent cations thickened or gelled by a synergistic mixture of finely divided or fumed silica and a surfactant, wherein said polyvalent cations are aluminium ions.

2. A composition according to claim 1, wherein said aqueous solution is a solution of aluminium sulphate.

3. A composition according to claim 1 or claim 2, wherein the aqueous salt solution has a concentration up to 20% w/v.

4. A composition according to any one of claims 1 to 3, wherein the finely divided or fumed silica is present in a concentration of from 3% to 10% by weight and the surfactant is present in a concentration of from 2.0% to 10% by weight (depending on its chemical structure).

5. A composition according to any one of claims 1 to 4, wherein said surfactant is a fatty alcohol sulphate compound or a sodium salt thereof, an ethoxylated nonyl phenol compound, a sodium alkyl ether sulphate or cetrimide.

6. A composition according to any one of claims 1 to 5, wherein said surfactant has an H.L.B. value greater than 10.

7. A composition according to any one of claims 1 to 6, wherein said surfactant comprises ethylene oxide condensates.

8. A composition according to claim 7, wherein said surfactant is a nonionic surfactant comprising more than 10 moles of ethylene oxide condensate per mole of surfactant.

9. A composition according to any one of claims 1 to 3, wherein said surfactant is cationic or amphoteric.

## Patentansprüche

1. Zusammensetzung, umfassend eine wässrige Lösung von polyvalenten Kationen, die mittels einer synergistischen Mischung von fein verteiltem oder hochdispersem Siliziumdioxid und einem Surfactant verdickt oder geliert ist, wobei die polyvalenten Kationen Aluminiumionen sind.

2. Zusammensetzung nach Anspruch 1, wobei die wässrige Lösung eine Lösung von Aluminiumsulfat ist.

3. Zusammensetzung nach Anspruch 1 oder 2, wobei die wässrige Salzlösung eine Konzentration von bis zu 20 Gew./Vol.-% aufweist.

4. Zusammensetzung nach einem der Ansprüche 1 bis 3, wobei das fein verteilte oder hochdisperse Siliziumdioxid in einer Konzentration von 3 Gew.-% bis 10 Gew.-% vorliegt und das Surfactant (je nach seiner chemischen Struktur) in einer Konzentration von 2,0 Gew.-% bis 10 Gew.-% vorliegt.

5. Zusammensetzung nach einem der Ansprüche 1 bis 4, wobei das Surfactant eine Fettalkoholsulfatverbindung oder ein Natriumsalz davon, eine ethoxylierte Nonylphenolverbindung, ein Natriumalkylethersulfat oder Cetrimid ist.

6. Zusammensetzung nach einem der Ansprüche 1 bis 5, wobei das Surfactant einen H.L.B.-Wert aufweist, der größer als 10 ist.

7. Zusammensetzung nach einem der Ansprüche 1 bis 6, wobei das Surfactant Ethylenoxidkondensate umfasst.

8. Zusammensetzung nach Anspruch 7, wobei das Surfactant ein nichtionisches Surfactant ist, das mehr als 10 mol Ethylenoxidkondensat pro Mol Surfactant umfasst.

9. Zusammensetzung nach einem der Ansprüche 1 bis 3, wobei das Surfactant kationisch oder amphoter ist.

## Revendications

1. Une composition comprenant une solution aqueuse de cations polyvalents épaissie, gélifiée par un mélange synergique de silice finement divisée ou pyrogénée et d'un surfactant, dans laquelle lesdits cations polyvalents sont des ions aluminium.

2. Une composition selon la revendication 1, dans laquelle la solution aqueuse est une solution de sulfate d'aluminium.

3. Une composition selon la revendication 1 ou 2, dans laquelle la solution aqueuse de sel présente une concentration de jusqu'à 20% en poids par volume.

4. Une composition selon l'une quelconque de revendications 1 à 3, dans laquelle la silice finement divisée ou pyrogénée est présente en une concentration de 3 % à 10 % en poids et le surfactant est présent en une concentration de 2,0 % à 10 % en poids (selon sa structure chimique).

5. Une composition selon l'une quelconque des revendications 1 à 4 dans laquelle ledit surfactant est un composé de sulfate d'alcool gras ou un sel de sodium de celui-ci, un composé de nonyl phenol éthoxylé, un alkyl éther sulfate de sodium ou un cetrimide.

6. Une composition selon l'une quelconque des revendications 1 à 5 dans laquelle ledit surfactant a une valeur H.L.B. supérieure à 10.

7. Une composition selon l'une quelconque des revendications 1 à 6, dans laquelle ledit surfactant comprend des condensats d'oxyde d'éthylène.

8. Une composition selon la revendication 7, dans laquelle ledit surfactant est un surfactant non ionique plus de 10 moles de condensat d'oxyde d'éthylène par mole de surfactant.

9. Une composition selon l'une quelconque des revendications 1 à 3, dans laquelle ledit surfactant est cationique et/ou amphotérique.
